(19) Europäisches Patentamt
European Patent Office
Office européen des brevets

(11) EP 2 275 255 B1

(12) **EUROPÄISCHE PATENTSCHRIFT**

(45) Veröffentlichungstag und Bekanntmachung des Hinweises auf die Patenterteilung:
**01.05.2013 Patentblatt 2013/18**

(51) Int Cl.:
***B32B 27/18*** *(2006.01)* ***C08L 67/02*** *(2006.01)*
***C08K 13/00*** *(2006.01)* ***C08K 5/00*** *(2006.01)*
***C08K 5/3437*** *(2006.01)*

(21) Anmeldenummer: **10006966.5**

(22) Anmeldetag: **06.07.2010**

(54) **Ein- oder mehrschichtige, stabilisierte Polyesterfolie**

Single layer or multilayer, stabilised polyester film

Feuille de polyester mono ou multicouches stabilisée

(84) Benannte Vertragsstaaten:
**DE FR GB IT LU**

(30) Priorität: **13.07.2009 DE 102009032820**

(43) Veröffentlichungstag der Anmeldung:
**19.01.2011 Patentblatt 2011/03**

(73) Patentinhaber: **Mitsubishi Polyester Film GmbH
65203 Wiesbaden (DE)**

(72) Erfinder:
- **Kliesch, Holger, Dr.
65462 Ginsheim-Gustavsburg (DE)**
- **Klein, Oliver, Dr.
55437 Ockenheim (DE)**
- **Bork, Andreas
65203 Wiesbaden (DE)**
- **Fischer, Ingo
65558 Heistenbach (DE)**

(74) Vertreter: **Schweitzer, Klaus et al
Plate Schweitzer Zounek
Patentanwälte
Rheingaustrasse 196
65203 Wiesbaden (DE)**

(56) Entgegenhaltungen:
**EP-A1- 1 127 912** **EP-A2- 1 371 682**
**WO-A1-2005/047265**

EP 2 275 255 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine ein- oder mehrschichtige Polyesterfolie, die eine sehr niedrige Transparenz für UV-Licht zwischen 320 und 400 nm aufweist. Die Erfindung betrifft weiterhin ein Verfahren für die Herstellung der Folie und ihre Verwendung.

UV-Stabilisatoren (UV-Stabilisator und UV-Absorber ist in dieser Schrift synonym) für Polymere sind nach dem Stand der Technik bekannt und stammen im wesentlichen aus den Stoffgruppen Triazine, Benzotriazole, Benzophenone, sterisch gehinderte Amine (Hals = hindered amin light stabilizer) und vielen anderen. Eine Auflistung findet sich z. B. in DE-A-101 35 795. Die hier interessierenden UV-Stabilisatoren haben die Aufgabe, den Polyester vor den Auswirkungen der UV-Strahlung zu schützen, und schützen weiterhin auch die Produkte vor UV-Licht, die sich im Strahlengang hinter der Folie befinden. UV-stabilisierte, orientierte Polyesterfolien sind bekannt, und die besondere Wirksamkeit von Stabilisatoren aus der Klasse der Triazine ist ebenfalls beschrieben siehe z.B. WO-A-1998/06575.

Die meisten für Polyester geeigneten Vertreter der oben genannten Absorbergruppen haben den Nachteil gemeinsam, dass ihre Absorption im Bereich von 360 bis 400 nm mit steigender Wellenlänge stark abnimmt und in kommerziell interessanten Konzentrationen (bis maximal 5 Gew.-%) oberhalb von 390 nm in der Regel bereits zu einer Transparenz > 40 % in ungefüllten klaren (< 0,5 % Füllgrad mit Partikeln) Polyesterfolien führt (Transparenz und Transmission ist in dieser Schrift synonym). Der Bereich oberhalb von 320 nm ist für die Stabilisierung von Polyethylenterephthalatfolie selbst von keiner Bedeutung, da Polyethylenterephthalat dort nicht mehr absorbiert; selbst Polyethylennaphthalat-haltige Folie hat oberhalb von 360 nm so gut wie keine Absorption mehr und wird konsequenterweise durch Licht dieser Wellenlängen nicht geschädigt. Anders sieht dies aber für viele andere organische Materialien wie Druckfarben, Vitamine, Fette, Geschmacksstoffe, natürliche Farbstoffe etc. aus. Diese absorbieren teilweise sehr stark im Bereich von 360 bis 400 nm und werden entsprechend stark durch diese Wellenlängen geschädigt. Daher ist es wünschenswert, zum Schutz solcher Stoffe Folien einzusetzen, die diesen Bereich möglichst umfassend abschirmen. Eine starke Absorption der Folie oberhalb von 400 nm ist hingegen zumeist nicht gewünscht, da die Folie dadurch eine unerwünschte Färbung erhält.

Eine relativ neue Klasse von kommerziell erhältlichen UV-Absorbern sind substituierte Naphthalin-1,8-dicarbonsäuremonoimide. Solche Verbindungen und ihre Benutzung in Polyestern sind u. a. in WO-A-2005/047265 beschrieben.

Diese Schrift beschreibt die Verwendung von Naphthalin-1,8-dicarbonsäuremonoimiden alleine oder in Kombination mit anderen UV-Absorbern. Als gegebenenfalls zusätzlich zu verwendende UV-Absorber werden Benztriazole, Triazine und Diphenylcyanoacrylate genannt. Andere Stabilisatorklassen wie Benzoxazine werden nicht erwähnt, es werden aber mehrere Verbindungen aus dem Bereich der Benztriazole und Diphenylcyanoacrylate als geeignet erwähnt. Beispielhaft ausgeführt wird neben 100 % Naphthalin-1,8-dicarbonsäuremonoimid in den Beispielen 25 bis 27 eine Kombination mit einem Diphenylcyanoacrylat in Beispiel 28.

Naphthalin-1,8-dicarbonsäuremonoimide aus WO-A-2005/047265 der Struktur I-C (insbesondere I-C.1-10) weisen eine deutlich höhere Absorption in Konzentrationen von 0,1 bis 5 Gew.-% in Polyesterfolien der Dicke 8 bis 200 $\mu$m auf als die meisten anderen bekannten kommerziell erhältlichen UV-Stabilisatoren aus den Gruppen der Triazine, Benzotriazole, Benzophenone, Benzoxazine oder Diphenylcyanoacrylate. Ihre Absorption fällt aber unterhalb von 350 nm deutlich ab, und da die Eigenabsorption von Polyesterfolien dieser Dicke erst unterhalb von 320 nm signifikant beiträgt, entsteht eine ungeschützte Lücke im UV-A-Bereich.

Verbindungen der Struktur I-C aus WO-A-2005/047265 weisen in Polyesterfolien zudem eine intensive bläulich-violette Fluoreszenz auf. Diese wird bereits in WO-A-2005/047265 erwähnt und als positiv zur Reduktion der Gelbzahl bezeichnet. In Polyesterfolien für Lebensmittelverpackungen, aber auch in Folien für andere Anwendungen, die teilbedruckt werden, ist diese Fluoreszenz jedoch unerwünscht bzw. sogar prohibitiv für den Einsatz, da sie einen intensiv "künstlichen" Eindruck erzeugt, der beim durchschnittlich "chemikalienfeindlichen" Nutzer zu Kaufzurückhaltung führen kann. In bedruckten Anwendungen erzeugt die Fluoreszenz eine Farbverschiebung bzw. eine unerwünschte "Farbe" in den unbedruckten Bereichen.

Ziel der vorliegenden Erfindung, war es, eine biaxial gestreckte Polyesterfolie mit einer Dicke im Bereich von 6 bis 150 $\mu$m zur Verfügung zu stellen, die bei 400 nm eine Transparenz von unter 90 %, bei 390 nm eine Transparenz von unter 50 %, bei 360 nm eine Transparenz von unter 20 % und bei 330 nm eine Transparenz von unter 30 % aufweist. Die Folie soll zudem keine visuelle Beeinträchtigung durch eine Fluoreszenz bei 400 bis 700 nm (sichtbarer Bereich) aufweisen. Die Folie soll sich zudem wirtschaftlich herstellen lassen, also eine Abrisszahl im Bereich von unstabilisierten Folien vergleichbarer Dicke aufweisen und nicht zu einer deutlichen Geruchsbelästigung im Produktionsprozess führen.

Gelöst wird diese Aufgabe durch den Einsatz von UV-Stabilisatoren der folgenden Strukturformel I (Naphthalin-1,8-dicarbonsäuremonoimide) in biaxial oriertierten, 6-150 $\mu$m dicken Polyesterfolien, wobei mindestens ein weiterer UV-Absorber, der nicht Formel I entspricht, enthalten ist (z. B. aus der Gruppe der Triazine, Benzophenone, Diphenylcyanoacrylate, Benzotriazole oder Benzoxazine),

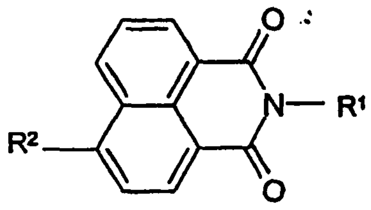

(I),

worin

$R^1$ Wasserstoff, Alkyl, Alkenyl, Cycloalkyl, Cycloalkenyl, Heterocycloalkyl, Aryl oder Heteroaryl bedeutet und
$R^2$ ein Rest ist, der mindestens ein $\pi$-Elektronensystem enthält, welches ein Kohlenstoff- atom enthält und mindestens ein weiteres Atom, ausgewählt aus Kohlenstoff, Sauer- stoff und Stickstoff, wobei der Rest $R^2$ mindestens ein von Kohlenstoff verschiedenes Atom enthält,

wobei die foliendickennormierte Konzentration des UV-Stabilisators oder der UV-Stabilisatoren der Formel I ($C_{nl}$) (bei Einsatz von zwei oder mehreren verschiedenen Verbindungen der Formel I ist die Gesamtkonzentration aller Verbindungen der Formel I gemeint) in der Folie folgende Gleichung 1 erfüllt:

$$C_{nl} = C_l \cdot d \qquad \text{Gleichung 1}$$

mit

d = Foliendicke (Einheit: $\mu$m)
$C_l$ = Gesamtkonzentration aller Verbindungen der Formel I in der Folie (Einheit: Gew.-%)
$C_{nl}$ = normierte Gesamtkonzentration aller Verbindungen der Formel I in der Folie (Einheit: Gew.-% $\cdot$ $\mu$m)

und bei $C_{nl} \geq 4$ Gew.-% $\cdot$ $\mu$m und $\leq 60$ Gew.-% $\cdot$ $\mu$m liegt.

Eine nähere Erläuterung für die oben erwähnten Reste (Alkyl, Alkenyl, Cycloalkyl, Cycloalkenyl, Heterocycloalkyl, Aryl oder Heteroaryl) und das $\pi$-Elektronensystem befindet sich in WO-A-2005/047265 auf den Seiten 4 bis 9.

Von den in WO-A-2005/047265 näher ausgeführten Substituenten $R^1$ sind die bevorzugt, die ein Molekulargewicht von > 29 g/Mol und besonders bevorzugt von > 77 g/Mol aufweisen, da dadurch die Einbindung in die Polyestermatrix verbessert wird. $R^1$ weist in einer bevorzugten Ausführungsform zudem aus demselben Grund mindestens einen Aromaten auf.

In einer bevorzugten Ausführungsform entspricht $R^2$ einem substituierten Phenoxyrest, wie er für die Verbindungsgruppe I-C in WO-A-2005/047265 dargestellt ist.

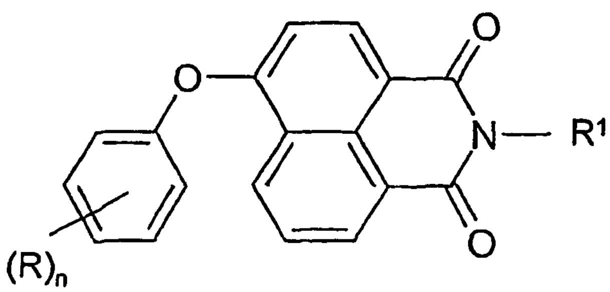

(I-C)

worin

$R^1$ wie oben entsprechend definiert ist,
R für identische oder verschiedene $C_1$-$C_{12}$-Alkylgruppen steht und
n 1, 2, 3, 4, oder 5 ist.

Andere als die oben definierten Substituenten an $R^2$ führen gewöhnlich zu Stabilisatoren, die in Polyesterfolien eine niedrigere Absorption zwischen 390 bis 400 nm aufweisen, und erhöhen so die Kosten bzw. führen durch die zur Erreichung der oben genannten Absorptionsbereiche höheren notwendigen Konzentration an Stabilisatoren zu mehr Problemen im Produktionsprozess wie Abrisse etc. (Einfluss auf wirtschaftliche Herstellbarkeit).

Besonders bevorzugt ist die Verbindung I-C.1 aus WO-A-2005/047265.

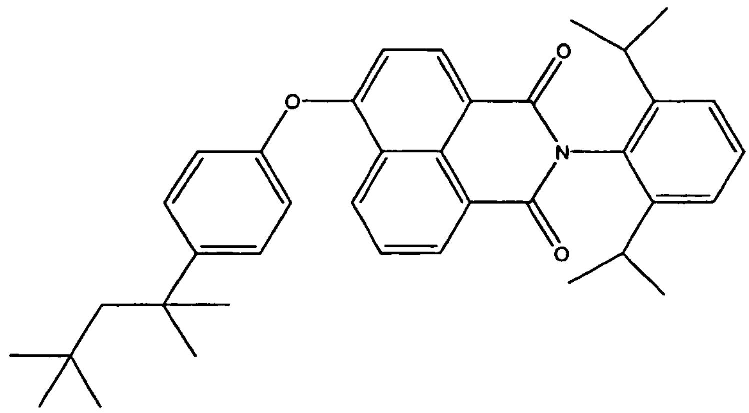

**Verbindung I-C.1:** N-(2,6-Diisopropylphenyl)-6-[4-(1,1,3,3-tetramethylbutyl)phenoxy]-1H-benzo[de]isoquinolin-1,3 (2H)-dione

Die Konzentration der UV-Absorber gemäß Formel I in der erfindungsgemäßen Folie ist dabei abhängig von der Foliendicke und wird so gewählt, dass eine ausreichende UV-Absorption im Bereich von 360 - 400 nm in Kombination mit dem zweiten UV-Absorber gewährleistet ist (Ausführungen hierzu s. u.). Ein Übermaß an Absorber verschlechtert die wirtschaftliche Herstellung der Folie und führt zudem tendenziell zu erhöhten Ausgasungen von Absorber aus der Folie.

Es hat sich als wirtschaftlich und gleichsam für die UV-Absorption wirkungsvoll erwiesen, wenn die foliendikkennormierte Konzentration von UV-Stabilisatoren der Formel I (bei Einsatz von zwei oder mehreren verschiedenen Verbindungen aus der Gruppe der UV-Stabilisatoren der Formel I ist mit "Konzentration" die Gesamtkonzentration aller Verbindungen der Formel I gemeint) in Gewichtsprozent folgende Gleichung 1 erfüllt:

$$C_{nI} = C_I \cdot d \qquad \textbf{Gleichung 1}$$

mit

d = Foliendicke (Einheit: µm)
$C_I$ = Gesamtkonzentration aller Verbindungen der Formel I in der Folie (Einheit: Gew.-%)
$C_{nI}$ = normierte Gesamtkonzentration aller Verbindungen der Formel I in der Folie (Einheit: Gew.-% · µm)

Wenn nicht anders beschrieben beziehen sich alle angegebenen Konzentrationen $C_I$ und $C_{nI}$ auf die Gesamtfolie.

Die Untergrenze von $C_{nI}$ liegt bei ≥ 4 Gew.-% · µm, bevorzugt bei ≥ 6 Gew.-% · µm, besonders bevorzugt bei ≥ 10 Gew.-% · µm, und idealerweise bei ≥ 18 Gew.-% · µm. Die Obergrenze von $C_{nI}$ liegt bei ≤ 60 Gew.-% · µm, bevorzugt bei ≤ 48 Gew.-% · µm, besonders bevorzugt bei ≤ 35 Gew.-% · µm und idealerweise bei ≤ 26 Gew.-% · µm.

Die Folie ist 6 bis 150 µm dick, wobei 8 bis 50 µm und insbesondere 10 bis 23 µm bevorzugt sind.

Neben den durch Formel I beschriebenen UV-Stabilisatoren enthält die Folie mindestens einen weiteren UV-Absorber, der nicht durch diese Formel beschrieben wird. Der zweite UV-Absorber weist in einer bevorzugten Ausführungsform mindestens ein Absorptionsmaximum oberhalb von 340 nm auf. Der zweite UV-Absorber ist dabei bevorzugt ein Triazin, ein Benztriazol, ein Benzophenon, ein Diphenylcyanoarcrylat oder ein Benzoxazin. Besonders bevorzugt sind Triazine (insbesondere Triphenyltriazinderivate) und Benzoxazine oder Kombinationen daraus. Besonders bevorzugt sind 2-(4,6-diphenyl-1,3,5-triazin-2-yl)-5-[(hexyl)oxy]-phenol (kommerziell erhältlich als Tinuvin® 1577 von Ciba SC, CH) und insbesondere 2,2'-(1,4-Phenylen)bis[4H-3,1-benzoxazin-4-on] (kommerziell erhältlich als Cyasorb® UV-3638 (Cytec, USA)). Diese UV-Stabilisatoren weisen eine hohe Absorption im Bereich von 320 bis 400 nm auf, insbesondere

in den Bereichen, in denen UV-Stabilisatoren der Strukturformel I in den erfindungsgemäßen Konzentrationen keine ausreichende Absorption aufweisen, und füllen so die spektralen Lücken. Außerdem sind die genannten Verbindungen überraschenderweise gut geeignet, um die Fluoreszenz von UV-Stabilisatoren der Strukturformel I zu unterdrücken. Grundsätzlich geht dies auch mit einer Vielzahl anderer UV-Stabilisatoren, aber diese weisen häufig andere Nachteile auf, weswegen sie weniger bevorzugt sind.

Viele Benzophenone wie z. B. 2-Hydroxy-4-methoxybenzophenon (Cyasorb UV-9 von Cytec, USA), aber auch Benztriazole wie 2-(2'-Hydroxy-5'-octylphenyl)benztriazol (Cyasorb UV-5411) weisen bei den für Polyester typischen Verarbeitungstemperaturen um 300 °C eine sehr hohe Flüchtigkeit auf und führen so zu einer starken Ausgasung im Produktionsbereich und sind insbesondere in Verpackungsfolien für Lebensmittel kritisch zu sehen, da sie auch eine relativ hohe Migrationstendenz aus dem Polyester aufweisen und sind daher weniger bevorzugt.

Viele UV-Absorber wie 2,2'-Methylenebis(6-(2H-benzotriazol-2-yl)-4-1,1,3,3tetramethylbutyl)phenol) (Tinuvin 360; Ciba, CH) sind nicht für den Einsatz in Folien für Lebensmittelverpackungen zugelassen und daher im Sinne der Erfindung weniger bevorzugt, da dadurch der potentielle kommerzielle Einsatz der Folie stark eingeschränkt würde. Andere wie Uvinul® 3030 (1,3-bis-[2'-cyano-3',3-diphenylacryloyl)oxy]-2,2-bis-{[2-cyano-3',3'-diphenylacryloyl)-oxy]methyl}propane; BASF, DE) löschen die Fluoreszenz der UV-Absorber der Formel I erst in sehr hohen Konzentrationen und sind daher weniger bevorzugt im Sinne der Erfindung.

Die genannten zusätzlichen UV-Stabilisatoren werden in einer bevorzugt Ausführungsform in Konzentrationen von 5 bis 400 Gew.-%, besonders bevorzugt von 10 bis 200 Gew.-% und idealerweise von 20 bis 100 Gew.-% der Konzentration der UV-Absorber I zugegeben. Diese Angaben beziehen sich auf die Gesamtkonzentration aller weiteren UV-Absorber/Stabilisatoren. Beispielhaft heißt das, dass die Gesamtkonzentration in Gew.-% aller weiteren UV-Absorber/Stabilisatoren sich idealerweise zwischen 0,2 und 1,0 Gew.-% bewegt, wenn die Konzentration von UV-Absorber der Formel I bei 1 Gew.-% liegt.

Die Folie ist entweder ein- oder mehrschichtig, wobei alle genannten Einsatzmaterialien unabhängig voneinander in den Schichten verteilt sein können. In einer bevorzugten Ausführungsform ist die Folie mindestens dreischichtig. In einer besonders bevorzugten Ausführungsform ist die Folie mindestens dreischichtig und die jeweils außen liegenden Schichten der Folie enthalten keinen UV-Absorber der Formel I. So wird eine besonders geringe Migration der Verbindungen der Formel I aus der Folie erreicht.

Es hat sich weiterhin als günstig erwiesen, wenn mindestens eine Schicht in Lichteinfallsrichtung, oberhalb der Verbindungen-der-Formel-I-enthaltenden Schicht/Schichten, weitere UV-Stabilisatoren wie oben beschrieben (die nicht der Formel I entsprechen) enthält/enthalten. Hierdurch wird die Fluoreszenz der Verbindungen I besonders deutlich reduziert. Es hat sich weiterhin als günstig erwiesen, wenn die Schicht/Schichten, die Verbindungen der Formel I enthält/enthalten, ebenfalls weitere UV-Stabilisatoren enthält/enthalten. Dies führt überraschenderweise zu einer geringeren Fluoreszenz verglichen mit Aufbauten, in denen sich die Gesamtmenge des Stabilisators in Schichten in Lichteinfallsrichtung oberhalb der Verbindungen-der-Formel-I-enthaltenden Schicht/Schichten befand. Es hat sich dabei als günstig erwiesen, wenn die Gesamtmenge weiterer UV-Stabilisatoren/Absorber in einer Verbindungen-der-Formel-I-enthaltenden Schicht mindestens 5 % (bezogen auf Gew.-%) der Menge an Verbindungen der Formel I beträgt. D. h. eine Schicht, die 1 Gew.-% Verbindungen gemäß Formel I enthält, enthält in dieser bevorzugten Ausführungsform zusätzlich mindestens 0,05 Gew.-% andere UV-Stabilisatoren.

Wenn neben der UV-Schutzfunktion von in Lichteinfallsrichtung hinter der Folie gelegenen Materialien auch eine UV-Stabilisierung der Folie selbst benötigt wird, hat es sich bei mehrschichtigen Folie als vorteilhaft erwiesen, wenn die dem Licht zugewandte Deckschicht (oder bei beidseitiger Belichtung und mindestens dreischichtigen Folien beide Deckschichten) einen UV-Stabilisator enthält, der weiterhin bevorzugt nicht Formel I entspricht. Insbesondere bevorzugt ist der Einsatz von Triazinstabilisatoren (insbesondere Triphenyltriazinderivaten wie Tinuvin 1577) in diesen Schichten. Diese Schichten enthalten dann bevorzugt mehr als 0,5 Gew.-% Stabilisator.

In allen Schichten können prinzipiell die gleichen Polyester eingesetzt werden, es können aber auch verschiedene Polyester in den unterschiedlichen Schichten eingesetzt werden.

Die Folie, ohne Berücksichtigung des/der UV-Stabilisators(en) und der unten genannten sonstigen Additive, also der reine Polymeranteil der Folie, besteht bevorzugt zu mindestens 80 Gew.-% und besonders bevorzugt zu mindestens 90 Gew.-% und idealerweise zu mindestens 97 Gew.-% aus Polyester. Dafür geeignet sind unter anderem Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroximethylcyclohexan und Terephthalsäure (= Poly(1,4-cyclohexandimethylenterephthalat), PCDT) sowie aus Ethylenglykol, Naphthalin-2,6-dicarbonsäure und Biphenyl-4,4'-dicarbonsäure (= Polyethylen-2,6-naphthalatbibenzoat, PENBB) und Polyester aus Isophthalsäure und Ethylenglykol sowie aus beliebigen Mischungen der genannten Carbonsäuren und Diole.

Bevorzugt sind Polyester, die zu mindestens 90 Mol-%, besonders bevorzugt mindestens 95 Mol-% (bezogen auf die Diol-Einheiten), aus Ethylenglykol- und bevorzugt mindestens 90 Mol-%, besonders bevorzugt mindestens 95 Mol-% (bezogen auf die Dicarbonsäure-Einheiten), aus der Summe aus Terephthalsäure-Einheiten und Naphthalin-2,6-dicarbonsäure-Einheiten bestehen. Idealerweise stammen mehr als 96,5 Mol-% aus den genannten Monomereinheiten.

Innerhalb dieser Grenzen werden besonders hohe Gas- und Aromabarrieren der Folie erreicht, die in vielen Anwendungen zusätzlich zum UV-Schutz benötigt werden. Die restlichen Monomereinheiten stammen aus anderen aliphatischen, cycloaliphatischen oder aromatischen Diolen bzw. Dicarbonsäuren.

Geeignete andere aliphatische Diole sind beispielsweise Diethylenglykol, Triethylenglykol, aliphatische Glykole der allgemeinen Formel $HO-(CH_2)_n-OH$, wobei n bevorzugt kleiner 10 ist.

In einer bevorzugten Ausführungsform enthält der Polyester mindestens 0,3 Gew.-%, besonders bevorzugt mindestens 1 Gew.-% und idealerweise mindestens 2 Gew.-% Naphthalindicarbonsäure abgeleitete Monomereinheiten. Aufgrund der UV-Eigenabsorption der Naphthalindicarbonsäureeinheiten kann in dieser Ausführungsform Stabilisator, der nicht der Formel I entspricht, eingespart werden.

Im Polymer für die Folie können weiterhin bis zu 20 Gew.-% an anderen Polymeren wie Polyolefine (z. B. COCs, Polypropylen etc.), Polyamide oder Polyetherimide enthalten sein. Bevorzugt liegt dieser Anteil aber bei unter 10 Gew.-%, und besonders bevorzugt besteht das Polymer zu 100 Gew.-% aus den vorgenannten Polyestern.

Die Folie kann zusätzlich übliche Additive wie beispielsweise Stabilisatoren und/oder Antiblockmittel enthalten, die nicht den zuvor genannten UV-Stabilisatoren entsprechen. Bevorzugt werden diese Additive in den Deckschichten (Schichten A und C), sofern vorhanden, eingesetzt. Dies können übliche Additive wie Radikalfänger/Thermostabilisatoren (z. B. Irganox® wie Irganox1010) und/oder Antiblockmittel oder Weißpigmente wie $TiO_2$ oder $BaSO_4$ sein. Sie werden in üblicher Weise dem Polymer zugesetzt. Als Stabilisatoren werden beispielsweise Phosphorverbindungen wie Phosphorsäure oder Phosphorsäureester eingesetzt.

Typische Antiblockmittel sind anorganische und/oder organische Partikel, beispielsweise Calciumcarbonat, kristalline oder amorphe Kieselsäure ($SiO_2$), Talk, Magnesiumcarbonat, Bariumcarbonat, Calciumsulfat, Lithiumphosphat, Calciumphosphat, Magnesiumphosphat, Aluminiumoxid, Aluminiumsilikate, LiF, Calcium-, Barium-, Zink- oder Mangan-Salze der eingesetzten Dicarbonsäuren, Kaolin oder vernetzte Polystyrol-, PMMA- oder Acrylat-Partikel.

Als Antiblockmittel können auch Mischungen von zwei und mehreren verschiedenen Antiblockmitteln oder Mischungen von Antiblockmitteln gleicher Zusammensetzung, aber unterschiedlicher Partikelgröße gewählt werden. Die Antiblockmittel können den einzelnen Schichten in den jeweils vorteilhaften Konzentrationen z. B. über den Polyester (Zugabe als glykolische Dispersion während der Polykondensation) oder über Masterbatche bei der Extrusion zugegeben werden. Üblicherweise liegen die Konzentrationen der Antiblockmittel (bezogen auf die jeweilige Schicht, in der sie eingesetzt werden) nicht über 5 Gew.-%, bevorzugt nicht über 3 Gew.-% und besonders bevorzugt nicht über 1 Gew.-%.

In einer bevorzugten Ausführungsform werden 0,01 bis 1 Gew.-%, bevorzugt 0,01 bis 0,1 Gew.-% Radikalfänger (Antioxidantien) hinzugegeben. Für eine Auswahl siehe DE 101 35 795, Seite 7, Punkt 1. Als besonders geeignet hat sich Irganox1010 (CAS-Nr. 6683-19-8) oder der Stabilisator mit der CAS-Nr. 065140-91-2 von Ciba SC/CH erwiesen.

Die Transparenz der Folie liegt bei 400 nm unter 90 % und bevorzugt unter 85 %, bei 390 nm liegt die Transparenz unter 50 %, bevorzugt unter 45 % und besonders bevorzugt unter 40 %, bei 360 nm liegt die Transparenz unterhalb 20 %, bevorzugt unter 10 % und besonders bevorzugt unter 6 %, und bei 330 nm liegt die Transparenz unterhalb von 30 %, bevorzugt unter 15 % und besonders bevorzugt unter 10 %. Bei 400 nm liegt die Transparenz zudem bei über 3 % und bevorzugt bei über 10 % und besonders bevorzugt bei über 20 %. Ist die Transparenz bei 400 nm zu niedrig (d. h. unter 3%) erhöht sich der Gelbstich der Folie.

Die Folie dient in den bevorzugten Anwendungen als UV-Schutz für (aus Sicht der UV-Strahlungsquelle) darunter/dahinter liegende Materialien. Insbesondere in Verpackungsanwendungen ist dabei aber nicht nur der Lichtschutz von Bedeutung, sondern auch eine hohe Gas-/Aroma-/Lösemittelbarriere ist für die Haltbarkeit der unter der Folie liegenden Materialien von großer Wichtigkeit. Um diese Eigenschaft zu verbessern, hat es sich als günstig erwiesen, wenn die Folie einen E-Modul in von größer 3000 $N/mm^2$ und bevorzugt von größer 3500 $N/mm^2$ und besonders bevorzugt > 4100 $N/mm^2$ in Längs- und Querrichtung aufweist. Die F5-Werte (Kraft bei 5 % Dehnung) liegen in einer üblichen Ausführungsform in Längs- und Querrichtung bei über 70 $N/mm^2$ und bevorzugt bei über 90 $N/mm^2$. Diese mechanischen Eigenschaften können beispielsweise durch geeignete biaxiale Streckung der Folie erhalten werden (s. Verfahrensbeschreibung).

Die erfindungsgemäße Folie weist üblicherweise bei 150 °C einen Schrumpf in Längs- und Querrichtung von unter 5 %, bevorzugt unter 4 % und besonders bevorzugt von unter 3 % auf. In dieser erfindungsgemäßen Ausführungsform weist die Folie weiterhin üblicherweise bei 100 °C eine Ausdehnung von weniger als 3 %, bevorzugt von weniger als 1 % und besonders bevorzugt von weniger als 0,3 % auf. Diese Formstabilität kann beispielsweise durch geeignete Thermofixierung und Relaxation der Folie vor dem Aufwickeln erhalten werden (s. Verfahrensbeschreibung). Innerhalb der genannten Schrumpf/Ausdehnungsbereiche ist die Folie bei guter Passergenauigkeit bedruckbar.

In einer weiteren bevorzugten Ausführungsform ist die Folie mindestens einseitig mit einer Haftvermittlung für Druckfarben beschichtet. Als Beschichtungen eignen sich beispielsweise Acrylate oder Copolyester mit Sulfoisophthalsäuregehalten von > 0,2 Gew.-%.

In einer weiteren bevorzugten Ausführungsform ist die Folie einseitig siegelfähig, wobei die Siegelschicht bevorzugt mit den übrigen Schichten coextrudiert wird. Falls ein Copolyester für die Siegelschicht verwendet wird, so hat dieser eine Zusammensetzung, die sich von der eingangs erwähnten bevorzugten Zusammensetzung des Polyesters

für die Folie hinsichtlich der genannten Bereiche für die Gesamtmenge an Ethylenglykol- und Terephthalsäure-Einheiten und Naphthalin-2,6-dicarbonsäure-Einheiten unterscheidet; die übrigen Schichten der Folie liegen aber weiterhin innerhalb der genannten Grenzen. Geeignete Siegelschichten sind bekannt und beispielsweise in den folgenden Schriften beschrieben: US-A-2009/061138, US-A-2009/061137, WO-A-2002/070606, EP-A-1 529 799, EP-A-1 380 414, EP-A-0 849 075. Die Folie mit Siegelschicht eignet sich hervorragend als Deckelfolie für Trays in Verpackungsanwendungen. Die Siegelschicht enthält in einer besonders bevorzugten Ausführungsform keinen UV-Absorber nach Formel I, da die Migration von niedrig molekularen Verbindungen aus diesen Schichten in das darunter liegende, verpackte Medium erhöht ist.

In einer bevorzugten Ausführungsform weist die Folie eine Trübung von unter 6 %, besonders bevorzugt eine Trübung von unter 5 % und idealerweise von unter 4 % auf. Die niedrige Trübung führt zu einem besonders strahlenden Eindruck von Druckfarben durch die Folie hindurch und lässt darunter liegendes Material besonders gut erkennen. Diese Trübung kann erreicht werden, indem nur solche UV-Absorber verwendet werden, die sich gut in die Polyestermatrix einbinden. Die jeweils bevorzugten Vertreter der oben genannten Substanzklassen führen zu den genannten guten Trübungswerten. Zur Erreichung dieser Trübungswerte ist es weiterhin günstig, wenn der Gehalt an Partikeln (z. B. Antiblockmittel) mit einem $d_{50}$ von > 0,7 $\mu$m kleiner 2 Gew.-% und bevorzugt kleiner 1 Gew.-% ist (bezogen auf die jeweilige Schicht).

<u>Verfahren</u>

Die Polyester-Matrixpolymere der einzelnen Schichten werden durch Polykondensation hergestellt, entweder ausgehend von Dicarbonsäuren und Diolen (sog. "PTA-Verfahren") oder auch ausgehend von den Estern der Dicarbonsäuren, vorzugsweise die Dimethylester) und Diolen (sog. "DMT-Verfahren"). Verwendbare Polyethylenterephthalate haben bevorzugt SV-Werte im Bereich von 600 bis 900 und Polyethylen-2,6-naphthalate von ca. 500 bis 800. Anorganische Partikel oder vernetzte organische Partikel können bereits bei der Herstellung des Polyesters zugegeben werden. Hierzu werden die Partikel in Ethylenglykol dispergiert, gegebenenfalls gemahlen, dekantiert usw. und dem Reaktor entweder im (Um)-Esterungs- oder Polykondensationsschritt zugegeben. Bevorzugt kann alternativ ein konzentriertes partikelhaltiges oder additivhaltiges Polyester-Masterbatch mit einem Zweischneckenextruder hergestellt werden und bei der Folienextrusion mit partikelfreiem Polyester verdünnt werden. Eine weitere Möglichkeit besteht darin, Partikel und Additive direkt bei der Folienextrusion in einem Zweischneckenextruder zuzugeben.

Nicht vernetzte organische Partikel werden entweder in einem Zweischneckenextruder zu einem Masterbatch verarbeitet oder direkt bei der Folienextrusion zugegeben.

Die UV-Stabilisatoren können der Folie über die Masterbatchtechnologie zugegeben werden. Dazu wird ein Polyesterrohstoff in einem Zweischneckenextruder aufgeschmolzen und der UV-Stabilisator hinzugegeben. Die Mischung wird anschließend durch eine Lochdüse extrudiert und in einem Wasserbad abgeschreckt und granuliert. Es hat sich als günstig erwiesen, wenn die Gehalte an UV- Stabilisator im Masterbatch bei 1 bis 33 Gew.-%, bevorzugt bei 5 bis 25 Gew.-% und besonders bevorzugt bei 10 bis 20 Gew.-%, liegen. Geringere Gehalte sind eher unwirtschaftlich, und ab etwa 25 Gew.-% kommt es zu einer ungenügenden Einbindung des UV-Stabilisators in die Polyestermatrix, die oberhalb von 33 Gew.-% zu sichtbaren "Ausschwitzungen" führt.

Die UV-Stabilisatoren können auch direkt bei der Folienherstellung zugegeben werden. Hierzu wird der Stabilisator in den entsprechenden Mengen direkt in den Extruder dosiert. Dies führt jedoch nur bei der Verwendung von Mehrschneckenextrudern (mindestens zwei), zu wirklich guten Verteilungsergebnissen.

Es hat sich zudem als günstig erwiesen, wenn der Extrudereinzug mit einem Schutzgasstrom überschichtet wird (z. B. Stickstoff oder Argon).

Die UV-Stabilisatoren können auch wie die Partikel bei der Polykondensation der Polymere zugegeben werden, diese Methode ist jedoch weniger bevorzugt, da hierbei Stabilisator durch thermischen Abbau und Ausgasungsverlust verloren geht und es meist zu einer deutlichen Gelbfärbung der Rohstoffe kommt.

Wenn Einschneckenextruder verwendet werden, dann hat es sich als vorteilhaft erwiesen, die Polyester vorher zu trocknen. Bei Verwendung eines Zweischneckenextruders mit Entgasungszone kann auf den Trocknungsschritt verzichtet werden.

Zunächst wird das Polymere bzw. die Polymermischung der Schicht oder bei Mehrschichtfolien der einzelnen Schichten in Extrudern komprimiert und verflüssigt. Dann werden die Schmelze/Schmelzen in einer Ein- bzw. Mehrschichtdüse zu flachen Schmelzefilmen ausgeformt, durch eine Breitschlitzdüse gepresst und auf einer Kühlwalze und einer oder mehreren Abzugswalzen abgezogen, wobei sie abkühlt und sich verfestigt. Es hat sich als günstig erwiesen, wenn in der Extrusion Temperaturen von 305 °C nicht überschritten werden, bzw. noch besser, wenn Temperaturen von 300 °C nicht überschritten werden (Vermeidung Gelbfärbung).

Die erfindungsgemäße Folie wird biaxial orientiert, d. h. biaxial gestreckt. Die biaxiale Verstreckung der Folie wird am häufigsten sequenziell durchgeführt. Dabei wird vorzugsweise erst in Längsrichtung (d. h. in Maschinenrichtung = MD-Richtung) und anschließend in Querrichtung (d. h. senkrecht zur Maschinenrichtung = TD-Richtung) verstreckt.

Das Verstrecken in Längsrichtung lässt sich mit Hilfe zweier entsprechend dem angestrebten Streckverhältnis verschieden schnell laufender Walzen durchführen. Zum Querverstrecken benutzt man im Allgemeinen einen entsprechenden Kluppenrahmen.

Statt der sequenziellen Streckung ist auch eine simultane Streckung der Folie möglich, aber nicht notwendig.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung in einem Temperaturbereich von 80 bis 130 °C (Aufheiztemperaturen 80 bis 130°C) und in Querrichtung in einem Temperaturbereich von 90 °C (Beginn der Streckung) bis 140 °C (Ende der Streckung) durchgerührt. Zum Erreichen der gewünschten Folieneigenschaften hat es sich als vorteilhaft erwiesen, wenn die Strecktemperatur (in MD- und TD-Richtung) unter 125 °C und bevorzugt unter 118 °C liegt. Das Längsstreckverhältnis liegt im Bereich von 2,0:1 bis 5,5:1, bevorzugt von 2,2:1 bis 5,0:1. Das Querstreckverhältnis liegt allgemein im Bereich von 2,4:1 bis 5,0:1, bevorzugt von 2,6:1 bis 4,5:1.

Vor der Querstreckung können eine oder beide Oberfläche(n) der Folie nach den an sich bekannten Verfahren in-line beschichtet werden. Die In-line-Beschichtung kann beispielsweise zu einer verbesserten Haftung zwischen einer Metallschicht oder einer Druckfarbe und der Folie, zu einer Verbesserung des antistatischen Verhaltens oder des Verarbeitungsverhaltens der Folie führen. Wenn die äußeren coextrudierten Schichten keine anorganischen Partikel zur Verbesserung der Schlupf- und Wickelcharakteristik enthalten, so kann an dieser Stelle eine partikelhaltige Beschichtung aufgebracht werden.

Bei der nachfolgenden Thermofixierung wird die Folie üblicherweise über eine Zeitdauer von etwa 0,1 bis 10 s unter Spannung bei einer Temperatur von 150 bis 250 °C gehalten und zum Erreichen der bevorzugten Schrumpf- und Längungswerte um mindestens 1 %, bevorzugt mindestens 3 % und besonders bevorzugt mindestens 4 % in Querrichtung relaxiert. Diese Relaxation findet bevorzugt in einem Temperaturbereich von 150 bis 190 °C statt. Bevorzugt finden < 25 % und > 5 % der Gesamtrelaxation innerhalb der ersten 25 % der Relaxationszeit statt. Anschließend wird die Folie in üblicher Weise aufgewickelt.

Bei der Herstellung der Folie ist gewährleistet, dass das Regenerat in einer Konzentration von 20 bis 60 Gew.-%, bezogen auf das Gesamtgewicht der Folie, wieder der Extrusion zugeführt werden kann, ohne dass dabei die physikalischen und optischen Eigenschaften der Folie nennenswert negativ beeinflusst werden.

Die erfindungsgemäße Folie zeichnet sich durch eine sehr gute UV-Absorption im Bereich von 320 bis 400 nm aus und eignet sich hervorragend zum Schutz von Gutem vor UV-Strahlung. Beispiele sind u. a. der Einsatz als durchsichtige Deckelfolie, z. B. auf Trays zur Verpackung von Fleisch- und Wurstwaren, Käse, farbigen Nudeln, Tierfutter sowie anderen Lebensmitteln, und führt zu einer verbesserten Shelf-Live der verpackten Produkte.

Zur Charakterisierung der Rohstoffe und der Folien wurden die folgenden Messwerte benutzt:

**Messung des mittleren Partikel-Durchmessers $d_{50}$**

Die Bestimmung des mittleren Durchmessers $d_{50}$ wird mittels Laser auf einem Horiba LA 500 mittels Laserdiffraktion durchgeführt (andere Messgeräte sind z. B. Malvem Master Sizer oder Sympathec Helos, welche das gleiche Messprinzip verwenden). Die Proben werden dazu in eine Küvette mit Wasser gegeben und diese dann in das Messgerät gestellt. Mittels Laser wird die Dispersion abgerastert und aus dem Signal durch Vergleich mit einer Eichkurve die Partikelgrößenverteilung bestimmt. Die Partikelgrößenverteilung ist durch zwei Parameter gekennzeichnet, den Medianwert $d_{50}$ (= Lagemaß für den Mittelwert) und das Streumaß, der sog. SPAN98 (= Maß für die Streuung des Partikeldurchmessers). Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50%-Ordinatenwertes mit der Summenkurve liefert auf der Abszissenachse den gewünschten $d_{50}$-Wert.

**Primärkorngröße von Nanoteilchen (z. B. Aerosil® und Nyacol®)**

Die Bestimmung der mittleren Größe der Primärteilchen erfolgt an transmissions-elektronenmikroskopischen (TEM) Aufnahmen des zu untersuchenden Produktes. Wenn die Probe als Folie oder Kunststoffgranulat vorliegt, so ist die TEM-Untersuchung an Mikrotomschnitten durchzuführen.

**UV/Vis-Spektren bzw. Transparenz bei bestimmter Wellenlänge**

Die Folien werden in Transmission in einem UV/Vis-Spektrometer (Lambda 12) der Firma Perkin Elmer, USA, gemessen. Als Hintergrund dient Luft. Die Transparenz wird bei der gewünschten Wellenlänge abgelesen.

**Mechanische Eigenschaften**

Der E-Modul, die Reißfestigkeit, Reißdehnung und der $F_5$-Wert werden in Längs- und Querrichtung nach ISO 527 - 1 und 527 - 3 (Probekörper Typ 2) mit Hilfe eines Zug-Dehnungsmesser (Typ 010 der Fa. Zwick/DE) gemessen.

**Schrumpf**

Der thermische Schrumpf wird an quadratischen Folienmustern mit einer Kantenlänge von 10 cm bestimmt. Die Proben werden genau ausgemessen (Kantenlänge $L_0$), 15 Minuten bei 150 °C in einem Umlufttrockenschrank getempert und anschließend bei Raumtemperatur genau ausgemessen (Kantenlänge L). Der Schrumpf ergibt sich aus der Gleichung:

$$\text{Schrumpf [\%]} = 100 \cdot (L_0 - L) / L_0$$

**Ausdehnung**

Die thermische Ausdehnung wird an quadratischen Folienmustern mit einer Kantenlänge von 10 cm bestimmt. Die Proben werden genau ausgemessen (Kantenlänge $L_0$), 15 Minuten bei 100 °C in einem Umlufttrockenschrank getempert und anschließend bei Raumtemperatur genau ausgemessen (Kantenlänge L). Die Ausdehnung ergibt sich aus der Gleichung:

$$\text{Ausdehnung [\%]} = 100 \cdot (L - L_0) / L_0$$

**SV-Wert (standard viscosity)**

Die Standardviskosität SV (DCE) wird, angelehnt an DIN 53 726, bei 25 °C in einer Konzentration von 1 % in Dichloressigsäure gemessen. Aus der relativen Viskosität ($\eta_{rel}$) wird der dimensionslose SV-Wert wie folgt ermittelt:

$$\text{SV (DCE)} = (\eta_{rel} - 1) \cdot 1000$$

Die intrinsische Viskosität (IV) korreliert wie folgt mit der Standardviskosität:

$$\text{IV (DCE)} = [\eta] = 6{,}907 \cdot 10^{-4}\ \text{SV (DCE)} + 0{,}063096\ [\text{dl/g}]$$

**Trübung**

Die Trübung wird bestimmt nach ASTM-D 1003-61 (Methode A) mittels Hazegard plus der Firma BYK-Gardner GmbH, DE.

**Fluoreszenz**

Die Fluoreszenz wird in Reflektion mittels Lambda 12 und Ulbrichtkugel vor einem schwarzen Hintergrund bestimmt. Das Fluoreszenzverhalten ist akzeptabel, wenn die gemessene Reflektion bei (einer Anregungswellenlänge von) 380 nm kleiner ist als 38 %, gut, wenn sie kleiner ist als 30 %, und sehr gut, wenn sie kleiner ist als 20 %.

**Beispiele**

Die Polymermischungen für jede Schicht wurden in einem Zweischneckenextruder aufgeschmolzen und in einem Adapter zusammengeführt und durch eine Breitschlitzdüse auf eine auf 60 °C temperierte Kühlwalze elektrostatisch angelegt. Die Temperatur in der Extrusion lag bei maximal 298 °C. Anschließend wurde sie bei folgenden Bedingungen längs- und dann quergestreckt:

| | | | |
|---|---|---|---|
| Längsstreckung | Aufheiztemperatur | 75-115 | °C |
| | Strecktemperatur | 115 | °C |
| | Längsstreckverhältnis | 3,7 | |
| Querstreckung | Aufheiztemperatur | 100 | °C |
| | Strecktemperatur | 110 | °C |
| | Querstreckverhältnis | 4,0 | |
| Fixierung | Temperatur | 237 - 150 | °C |
| | Dauer | 4 | sec |
| | Relaxation in TD bei 200 - 150 °C | 7 | % |
| | Relaxationszeit | 2 | sec |
| | Relaxation bis 25 % der Relaxationszeit | 1 | % |

Alle eingesetzten Polyesterrohstoffe bestanden zu mehr als 96,5 Mol-% aus Ethylenglykol- und Terephthalsäure-Einheiten (im Polyesteranteil). Die SV-Werte aller eingesetzten Rohstoffe lag zwischen 740 und 880. In den Beispielen kamen die folgenden Rohstoffe und Masterbatche zum Einsatz:

**Masterbatch MB1**

10 Gew.-% N-(2,6-Diisopropylphenyl)-6-[4-(1,1,3,3-tetramethylbutyl)phenoxy]-1H-benzo-[de]isoquinolin-1,3 (2H)-dione (S-Pack der Firma BASF, DE) wurden zusammen mit 90 Gew.-% Polyethylenterephthalatrohstoff der Firma Invista, DE, in einem konventionellen Zweischneckenextruder granuliert.

**Masterbatch MB2**

20 Gew.-% Cyasorb 3638 der Firma Cytec wurden zusammen mit 80 Gew.-% Polyethylenterephthalatrohstoff der Firma Invista, DE, in einem konventionellen Zweischneckenextruder granuliert.

**Masterbatch MB3**

20 Gew.-% Tinuvin 1577 der Firma Ciba wurden zusammen mit 80 Gew.-% Polyethylenterephthalatrohstoff der Firma Invista, DE, in einem konventionellen Zweischneckenextruder granuliert.

**Masterbatch MB4**

1,25 Gew.-% $SiO_2$ (Aerosil TT600 der Firma Evonik) und 1 Gew.-% $SiO_2$ (Sylobloc 44H der Firma Grace) in Polyethylenterephthalatrohstoff der Firma Invista/DE. Die jeweiligen Pigmentdispersionen sind nach der Umesterung zugegeben worden. Die Primärkorngröße von Aerosil lag bei 40 nm. Der $d_{50}$ von Sylobloc lag bei 2,5 μm.

**Rohstoff R1**

100 Gew.-% Polyethylenterephthalat der Firma Invista, DE.

**Vergleichsbeispiel 1**

Eine Monofolie wurde in der Dicke von 12 μm nach oben genannten Angaben hergestellt: Rohstoffmischung: 20 Gew.-% MB1 / 5 Gew.-% MB4 / 75 Gew.-% R1

**Beispiel 1**

Es wurde eine ABA-Folie mit einer Dicke der Basisschicht von 8,5 μm und jeweils 1,75 μm dicken Deckschichten A, wie oben angegeben, hergestellt.

Deckschicht A: 8 Gew.-% MB4 / 92 Gew.-% R1
Basisschicht B: 6 Gew.-% MB2 / 24 Gew.-% MB1 / 70 Gew.-% R1

**Beispiel 2**

Es wurde eine ABA-Folie mit einer Dicke der Basisschicht von 8,5 μm und jeweils 1,75 μm dicken Deckschichten A, wie oben angegeben, hergestellt.
Deckschicht A: 8 Gew.-% MB4 / 10 Gew.-% MB3 / 82 Gew.-% R1
Basisschicht B: 6 Gew.-% MB2 / 24 Gew.-% MB1 / 70 Gew.-% R1

Eine Zusammenfassung der Eigenschaften der Folien aus den Beispielen steht in Tabelle 1.

Während die Folien aus den Beispielen 1 und 2 alle geforderten Eigenschaften der Anwendung aufwiesen, hatte die Folie aus Vergleichsbeispiel 1, die keinen Co-Stabilisator enthielt, gewisse Defizite. Als Beispiele für diese Defizite seien die UV-Transparenz insbesondere bei niedrigeren Wellenlängen und die höhere Fluoreszenz genannt.

**Tabelle 1: Eigenschaften der Beispiele**

| Messwert | Vergleichsbeispiel 1 | Beispiel 1 | Beispiel 2 |
|---|---|---|---|
| Dicke | 12 μm | 12 μm | 12 μm |
| Konzentration von I ($C_I$) | 2 Gew.-% | 1,7 Gew.% | 1,7 Gew.-% |
| Normierte Konzentration von I ($C_{nI}$) | 24 Gew.-% ·μm | 20,4 Gew.-% ·μm | 20,4 Gew.-% ·μm |
| Konzentration aller Co-Stabilisatoren, bezogen auf Konzentration von I | 0 Gew.-% | 50 Gew.-% | 84 Gew.-% |
| Konzentration UV Stabilisator in MB | 10 Gew.-% | 10 bzw. 20 Gew.-% | 10 bzw. 20 Gew.-% |
| Transparenz bei 400 nm | 60 % | 63 % | 62 % |
| Transparenz bei 390 nm | 28 % | 32 % | 31 % |
| Transparenz bei 360 nm | 13 % | 4 % | 2 % |
| Transparenz bei 330 nm | 36 % | 4 % | 2 % |
| Fluoreszenz bei Anregungswellenlänge von 380 nm | 42 % | 35 % | 19 % |
| Trübung | 4,5 % | 3,9 % | 3,8 % |
| Schrumpf 150 °C/15 min (MD / TD) | 1,5 % / 0,4 % | 1,4 % / 0,3 % | 1,5 % / 0,3 % |
| Ausdehnung 100 °C (MD / TD) | 0,18 % | 0,16 % | 0,17 % |
| E-Modul (MD / TD) | 4500 $N/mm^2$ / 4900 $N/mm^2$ | 4500 $N/mM^2$ / 4900 $N/mm^2$ | 4500 $N/mm^2$ / 4900 $N/mm^2$ |
| F5-Wert (MD / TD) | 100 $N/mm^2$ / 105 $N/mM^2$ | 100 $N/mm^2$ / 105 $N/mm^2$ | 100 $N/MM^2$ / 105 $N/mm^2$ |

**Patentansprüche**

1. Biaxial orientierte, 6 bis 150 μm dicke Polyesterfolie, enthaltend mindestens einen UV-Stabilisator der Formel I

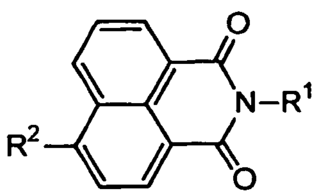

(I)

worin

$R^1$ Wasserstoff, Alkyl, Alkenyl, Cycloalkyl, Cycloalkenyl, Heterocycloalkyl, Aryl oder Heteroaryl bedeutet und $R^2$ ein Rest ist, der mindestens ein $\pi$-Elektronensystem enthält, welches ein Kohlenstoffatom enthält und mindestens ein weiteres Atom, ausgewählt aus Kohlenstoff, Sauerstoff und Stickstoff, wobei der Rest $R^2$ mindestens ein von Kohlenstoff verschiedenes Atom enthält,

wobei die foliendickennormierte Konzentration des UV-Stabilisators oder der UV-Stabilisatoren der Formel I ($C_{nI}$) (bei Einsatz von zwei oder mehreren verschiedenen Verbindungen der Formel I ist die Gesamtkonzentration aller Verbindungen der Formel I gemeint) in der Folie folgende Gleichung 1 erfüllt:

$$C_{nI} = C_I \cdot d \qquad \text{Gleichung 1}$$

mit

d = Foliendicke (Einheit: $\mu$m)
$C_1$ = Gesamtkonzentration aller Verbindungen der Formel I in der Folie (Einheit: Gew.-%)
$C_{nI}$ = normierte Gesamtkonzentration aller Verbindungen der Formel I in der Folie (Einheit: Gew.-% $\cdot$ $\mu$m)

und bei $C_{nI} \geq 4$ Gew.-% $\cdot$ $\mu$m und $\leq 60$ Gew.-% $\cdot$ $\mu$m liegt und die Folie mindestens einen weiteren UV-Absorber, der nicht der Formel I entspricht, enthält.

**2.** Polyesterfolie nach Anspruch 1, **dadurch gekennzeichnet, dass** der weitere UV-Absorber, der nicht der Formel I entspricht, ausgewählt ist aus der Gruppe der Triazine, Benzophenone, Diphenylcyanoacrylate, Benzotriazole und Benzoxazine, bevorzugt ausgewählt aus der Gruppe der Triazine, insbesondere Triphenyltriazinderivate und Benzoxazine und Kombinationen aus diesen beiden, ganz besonders bevorzugt ausgewählt aus 2-(4,6-diphenyl-1,3,5-triazin-2-yl)5-[(hexyl)oxy]-phenol und 2,2'-(1,4-Phenylen)bis[4H-3,1-benzoxazin-4-on] und Kombinationen aus diesen beiden.

**3.** Polyesterfolie nach Anspruch 1 oder 2, **dadurch gekennzeichnet, dass** der Substituent R' ein Molekulargewicht von > 29 g/mol aufweist.

**4.** Polyesterfolie nach einem der Ansprüche 1 bis 3, **dadurch gekennzeichnet, dass** der UV-Stabilisator eine Verbindung der Formel I-C ist,

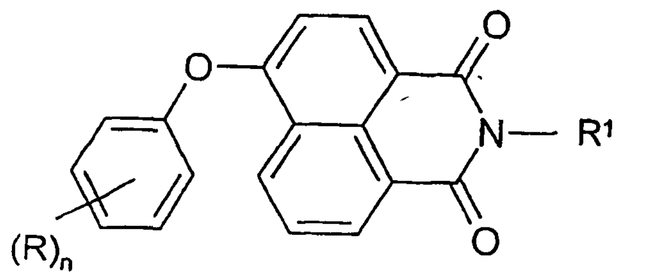

(I-C)

worin

$R^1$ wie in Anspruch 1 definiert ist,
R für identische oder verschiedene $C_1$-$C_{12}$-Alkylgruppen steht und
n 1, 2, 3, 4, oder 5 ist.

**5.** Polyesterfolie nach einem der Ansprüche 1 bis 4, **dadurch gekennzeichnet, dass** der UV-Stabilisator eine Verbindung der Formel

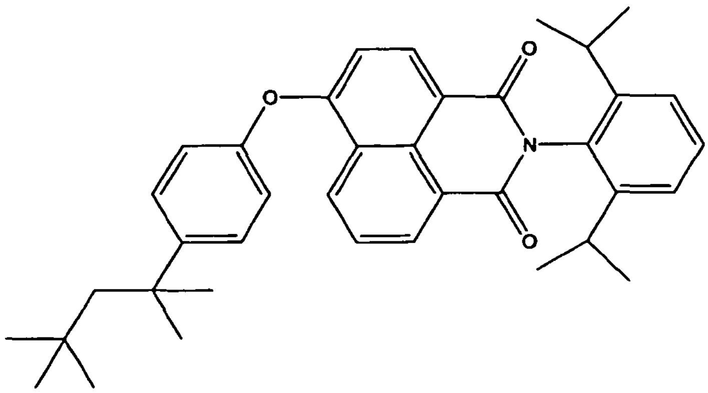

ist.

6. Polyesterfolie nach einem der Ansprüche 1 bis 5, **dadurch gekennzeichnet, dass** der weitere UV-Absorber, der nicht der Formel I entspricht, in einer Konzentration von 5 bis 400 Gew.-% der Konzentration der UV-Absorbers der Formel I vorhanden ist.

7. Polyesterfolie nach einem der Ansprüche 1 bis 6, **dadurch gekennzeichnet, dass** sie dreischichtig ist und aus zwei außenliegenden Deckschichten und einer zwischen den beiden Deckschichten angeordneten Basisschicht besteht.

8. Polyesterfolie nach Anspruch 7, **dadurch gekennzeichnet, dass** die jeweils außen liegenden Schichten (Deckschichten) der Folie keinen UV-Absorber der Formel I enthalten.

9. Polyesterfolie nach Anspruch 7 oder 8, **dadurch gekennzeichnet, dass** mindestens eine Deckschicht mindestens einen weiteren UV-Absorber, der nicht der Formel I entspricht, enthält.

10. Polyesterfolie nach Anspruch 7, 8 oder 9, **dadurch gekennzeichnet, dass** die Basisschicht mindestens einen weiteren UV-Absorber, der nicht der Formel I entspricht, enthält.

11. Polyesterfolie nach Anspruch 1 mit einer Transparenz

    a. bei 400 nm von unter 90 %,
    b. bei 390 nm von unter 50 %,
    c. bei 360 nm von unter 20 %
    d. bei 330 nm von unter 30 % und
    e. bei 400 nm von über 3 %.

12. Verfahren zur Herstellung von ein- oder mehrschichtigen, 6 bis 150 $\mu$m dicken Polyesterfolien gemäß Anspruch 1, wobei zunächst das Polymere oder die Polymermischung der jeweiligen Schicht der Polyesterfolie in einem Extruder komprimiert und verflüssigt wird und dann die Schmelze oder die Schmelzen in einer Ein- oder Mehrschichtdüse zu (einem) flachen Schmelzefilm(en) ausgeformt werden (wird), durch eine Breitschlitzdüse gepresst und auf einer Kühlwalze und einer oder mehreren Abzugswalzen abgezogen werden (wird), wobei der (die) Film(e) als Vorfolie abkühlt und sich verfestigt, die Vorfolie dann biaxial orientiert wird, nachfolgend thermofixiert und schließlich aufgewickelt wird, **dadurch gekennzeichnet, dass** die Folie mindestens einen UV-Stabilisator der Formel I gemäß Anspruch 1 und mindestens einen weiteren UV-Absorber, der nicht der Formel I entspricht, enthält und wobei die foliendickennormierte Konzentration des UV-Stabilisators oder der UV-Stabilisatoren der Formel I ($C_{nI}$) (bei Einsatz von zwei oder mehreren verschiedenen Verbindungen der Formel I ist die Gesamtkonzentration aller Verbindungen der Formel I gemeint) in der Folie folgende Gleichung 1 erfüllt:

$$C_{nI} = C_I \cdot d \qquad \text{Gleichung 1}$$

mit

d = Foliendicke (Einheit: μm)
$C_I$ = Gesamtkonzentration aller Verbindungen der Formel I in der Folie (Einheit: Gew.-%)
$C_{nI}$ = normierte Gesamtkonzentration aller Verbindungen der Formel I in der Folie (Einheit: Gew.-% · μm)

und bei $C_{nI} \geq 4$ Gew.-% · μm und $\leq 60$ Gew.-% · μm liegt.

**13.** Verwendung einer Polyesterfolie nach Anspruch 1 als Verpackungsfolie, insbesondere zur Verpackung von Lebensmitteln, insbesondere Fleisch- und Wurstwaren, Käse, farbigen Nudeln und Tierfutter.

**14.** Verwendung nach Anspruch 13 als durchsichtige Deckelfolie, insbesondere als Deckelfolie für Trays.

## Claims

**1.** A biaxially oriented polyester film of thickness from 6 to 150 μm, comprising at least one UV stabilizer of the formula I,

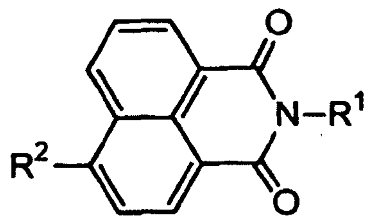

(I)

in which

$R^1$ is hydrogen, alkyl, alkenyl, cycloalkyl, cycloalkenyl, heterocycloalkyl, aryl, or heteroaryl, and
$R^2$ is a moiety which contains at least one π-electron system, which contains a carbon atom and at least one further atom selected from carbon, oxygen, and nitrogen, where the moiety $R^2$ contains at least one atom different from carbon,

where the film-thickness-standardized concentration of the UV stabilizer(s) of the formula I ($C_{nI}$) (when two or more different compounds of the formula I are used, this means the total concentration of all of the compounds of the formula I) in the film complies with the following equation 1:

$$C_{nI} = C_I \bullet d$$

Equation 1

where

d = film thickness (unit: μm)
$C_I$ = total concentration of all of the compounds of the formula I in the film (unit: % by weight)
$C_{nI}$ = standardized total concentration of all of the compounds of the formula I in the film (unit: % by weight • μm)

and is $C_{nI} \geq 4$ % by weight • μm and $\leq 60$ % by weight • μm and the film comprises at least one further UV absorber which does not correspond to the formula I.

**2.** The polyester film as claimed in claim 1, wherein the further UV absorber which does not correspond to the formula I has been selected from the group of the triazines, benzophenones, diphenylcyanoacrylates, benzotriazoles and benzoxazines, preferably selected from the group of the triazines, in particular triphenyltriazine derivatives, and

benzoxazines, and combinations of these, very particularly preferably selected from 2-(4,6-diphenyl-1,3,5-triazine-2-yl)-5-[(hexyl)oxyl]phenol and 2,2'-(1,4-phenylene)bis[4H-3,1-benzoxazine-4-one], and combinations of these.

**3.** The polyester film as claimed in claim 1 or 2, wherein the molar mass of the substituent $R^1$ is > 29 g/mol.

**4.** The polyester film as claimed in any of claims 1 to 3, wherein the UV stabilizer is a compound of the formula I-C,

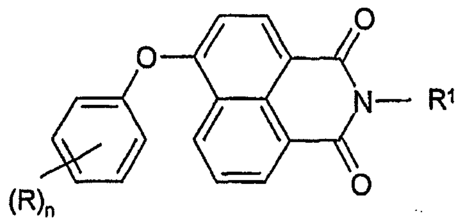

(I-C)

in which

$R^1$ is defined as in claim 1,
R is identical or different $C_1$-$C_{12}$-alkyl groups, and
n is 1, 2, 3, 4, or 5.

**5.** The polyester film as claimed in any of claims 1 to 4, wherein the UV stabilizer is a compound of the formula

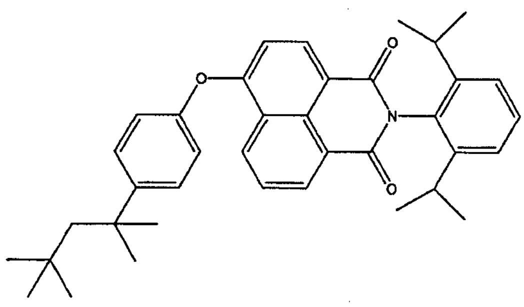

.

**6.** The polyester film as claimed in any of claims 1 to 5, wherein the concentration present of the further UV absorber not corresponding to the formula I is from 5 to 400 % by weight of the concentration of the UV absorber of the formula I.

**7.** The polyester film as claimed in any of claims 1 to 6, which has three layers and is composed of two external outer layers and of a base layer arranged between the two outer layers.

**8.** The polyester film as claimed in claim 7, wherein the respective external layers (outer layers) of the film comprise no UV absorber of the formula I.

**9.** The polyester film as claimed in claim 7 or 8, wherein at least one outer layer comprises at least one further UV absorber not corresponding to the formula I.

**10.** The polyester film as claimed in claim 7, 8 or 9, wherein the base layer comprises at least one further UV absorber not corresponding to the formula I.

**11.** The polyester film as claimed in claim 1 with transparency which is

a. below 90 % at 400 nm,
b. below 50 % at 390 nm,
c. below 20 % at 360 nm,
d. below 30 % at 330 nm, and

e. above 3 % at 400 nm.

**12.** A process for producing a single- or multilayer polyester film of thickness from 6 to 150 μm as claimed in claim 1, where the polymer or the polymer mixture of the respective layer of the polyester film is first compressed and plastified in an extruder, and then the melt(s) is/are extruded through an extrusion or coextrusion die to give (a) flat melt film (s), forced through a flat-film die, and drawn off on a chill roll and on one or more take-off rolls, whereupon the film (s) cools and solidifies in the form of a prefilm, and the prefilm is then biaxially oriented, and then heat-set, and finally wound up, which comprises producing a film comprising at least one UV stabilizer of the formula I as claimed in claim 1 and comprising at least one further UV absorber not corresponding to the formula I and where the film-thickness-standardized concentration of the UV stabilizer(s) of the formula I ($C_{nI}$) (when two or more different compounds of the formula I are used, this means the total concentration of all of the compounds of the formula I) in the film complies with the following equation 1:

$$C_{nI} = C_I \bullet d \qquad \text{Equation 1}$$

where

d = film thickness (unit: μm)
$C_I$ = total concentration of all of the compounds of the formula I in the film (unit: % by weight)
$C_{nI}$ = standardized total concentration of all of the compounds of the formula I in the film (unit: % by weight • μm)

and is $C_{nI} \geq 4$ % by weight • μm and $\leq 60$ % by weight • μm.

**13.** The use of a polyester film as claimed in claim 1 as packaging film, in particular for the packaging of food or drink, in particular meat products and sausage products, cheese, colored pasta, and animal feed.

**14.** The use as claimed in claim 13 in the form of transparent lid film, in particular in the form of lid film for trays.

## Revendications

**1.** Feuille de polyester épaisse de 6 à 150 μm, orientée de manière biaxiale, contenant au moins un stabilisant UV de formule I

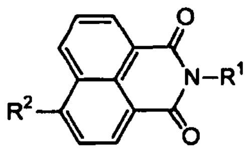

(I)

dans laquelle

$R^1$ signifie hydrogène, alkyle, alcényle, cycloalkyle, cycloalcényle, hétérocycloalkyle, aryle ou hétéroaryle et $R^2$ est un résidu, qui contient au moins un système d'électrons n, lequel contient un atome de carbone et au moins un autre atome choisi parmi carbone, oxygène et azote, le résidu $R^2$ contenant au moins un atome différent du carbone,

où la concentration, normalisée grâce à l'épaisseur de feuille, du stabilisant UV ou des stabilisants UV de la formule I($C_{nI}$) (pour l'utilisation de deux ou plus de deux composés différents de la formule I, on considère la concentration totale de tous les composés de la formule I) dans la feuille est conforme à l'équation 1 ci-dessous :

$$C_{nI} = C_I \cdot d \qquad \text{Equation 1}$$

avec

d = Epaisseur de feuille (unité : $\mu$m)
$C_I$ = Concentration totale de tous les composés de la formule I dans la feuille (unité : % en poids)
$C_{nI}$ = Concentration totale normalisée de tous les composés de la formule I dans la feuille (unité : % en poids·$\mu$m)

et est conforme à $C_{nI} \geq 4$ % en poids • $\mu$m et $\leq 60$ % en poids • $\mu$m et
la feuille contient au moins un autre absorbant UV qui ne correspond pas à la formule I.

2. Feuille de polyester selon la revendication 1, **caractérisée en ce que** l'autre absorbant UV, qui ne correspond pas à la formule I, est choisi parmi le groupe des triazines, benzophénones, diphénylcyanoacrylates, benzotriazoles et benzoxazines, de manière préférée choisi parmi le groupe des triazines, en particulier des dérivés triphényltriazines et benzoxazines et des combinaisons issues de ces deux groupes, de manière particulièrement préférée choisi parmi le 2-(4,6-diphényl-1,3,5-triazine-2-yl)5-[(hexyl)oxy]-phénol et le 2,2'-(1,4-phénylène)bis[4H-3,1-benzoxazine-4-one] et des combinaisons de ceux-ci.

3. Feuille de polyester selon la revendication 1 ou 2, **caractérisée en ce que** le substituant $R^1$ présente un poids moléculaire > 29 g/mol.

4. Feuille de polyester selon l'une quelconque des revendications 1 à 3, **caractérisée en ce que** le stabilisant UV est un composé de la formule I-C,

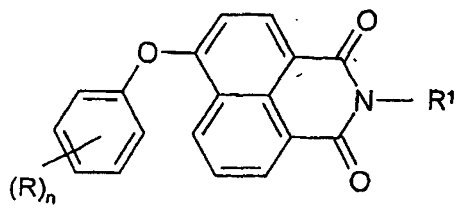

(I-C)

dans laquelle

$R^1$ est défini selon la revendication 1,
R représente des groupes alkyle en $C_1$ à $C_{12}$ identiques ou différents et
n vaut 1, 2, 3, 4, ou 5.

5. Feuille de polyester selon l'une quelconque des revendications 1 à 4, **caractérisée en ce que** le stabilisant UV est un composé de la formule

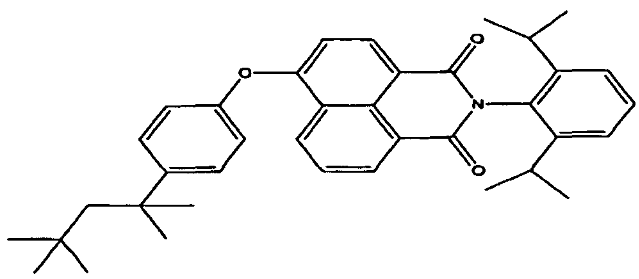

6. Feuille de polyester selon l'une quelconque des revendications 1 à 5, **caractérisée en ce que** l'autre absorbant UV, qui ne correspond pas à la formule I, est présent en une concentration de 5 à 400 % en poids de la concentration

de l'absorbant UV de la formule I.

7. Feuille de polyester selon l'une quelconque des revendications 1 à 6, **caractérisée en ce qu'**elle comporte trois couches et est constituée de deux couches de couverture extérieures et d'une couche de base agencée entre les deux couches de couverture.

8. Feuille de polyester selon la revendication 7, **caractérisée en ce que** les couches situées respectivement à l'extérieur (couches de couverture) de la feuille ne contiennent aucun absorbant UV de la formule I.

9. Feuille de polyester selon la revendication 7 ou 8, **caractérisée en ce qu'**au moins une couche de couverture contient au moins un autre absorbant UV, qui ne correspond pas à la formule I.

10. Feuille de polyester selon la revendication 7, 8 ou 9, **caractérisée en ce que** la couche de base contient au moins un autre absorbant UV, qui ne correspond pas à la formule I.

11. Feuille de polyester selon la revendication 1 avec une transparence

    a. de moins de 90 % pour 400 nm
    b. de moins de 50 % pour 390 nm
    c. de moins de 20 % pour 360 nm
    d. de moins de 30 % pour 330 nm et
    e. de plus de 3 % pour 400 nm.

12. Procédé de fabrication de feuilles de polyester épaisses de 6 à 150 µm, à une ou plusieurs couches, selon la revendication 1, où le polymère ou le mélange polymère de la couche respective de la feuille de polyester est d'abord comprimé et fluidifié dans une extrudeuse et la masse en fusion ou les masses en fusion est ou sont ensuite formée(s) dans une buse monocouche ou multicouche pour donner un (ou des) film(s) en fusion plat(s), comprimé(s) par l'intermédiaire d'une filière plate et étiré(s) sur un rouleau de refroidissement et un ou plusieurs rouleau(x) d'étirage, où le (ou les) film(s) refroidit(refroidissent) et se solidifie(nt) en tant que préfeuille(s), la (ou les) préfeuille(s) est ou sont ensuite orientée(s) de manière biaxiale, puis thermofixée(s) et ensuite enroulée(s), **caractérisée en ce que** la feuille contient au moins un stabilisant UV de la formule I selon la revendication 1 et au moins un autre absorbant UV, qui ne correspond pas à la formule I, et la concentration, normalisée par l'épaisseur de feuille, du stabilisant UV ou des stabilisants UV de la formule I ($C_{nI}$) (pour l'utilisation de deux ou plus de deux composés différents de la formule I, on considère la concentration totale de tous les composés de la formule I) dans la feuille est conforme à l'équation 1 ci-dessous :

$$C_{nI} = C_I \cdot d \qquad \text{Equation 1}$$

avec

    d = Epaisseur de feuille (unité : µm)
    $C_I$ = Concentration totale de tous les composés de la formule I dans la feuille (unité : % en poids)
    $C_{nI}$ = Concentration totale normalisée de tous les composés de la formule I dans la feuille (unité : % en poids • µm)

et est conforme à $C_{nI} \geq 4$ % en poids • µm et $\leq 60$ % en poids • µm.

13. Utilisation d'une feuille de polyester selon la revendication 1 comme feuille d'emballage, en particulier pour l'emballage de produits alimentaires, en particulier des préparations à base de viande et des saucissons, des fromages, des pâtes alimentaires colorées et de la nourriture pour animaux.

14. Utilisation selon la revendication 13 comme feuille de couverture transparente, en particulier comme feuille de couverture pour des barquettes.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10135795 A
- WO 199806575 A
- WO 2005047265 A
- DE 10135795
- US 2009061138 A
- US 2009061137 A
- WO 2002070606 A
- EP 1529799 A
- EP 1380414 A
- EP 0849075 A